# EUROPEAN PATENT SPECIFICATION

(11) **EP 0 319 020 B1**
(45) Date of publication and mention of the grant of the patent: **09.03.1994**
(21) Application number: 88120149.5
(22) Date of filing: 02.12.1988
(51) Int. Cl.: H02H 7/18, H04M 1/72

(54) **Over-discharge protection circuit**
Über-Entladungsschutzschaltung
Circuit de protection contre une décharge exagérée

(30) Priority: 03.12.1987 JP 304419/87
(43) Date of publication of application: 07.06.1989
(73) Proprietor: FUJITSU LIMITED, Kawasaki-shi, Kanagawa 211 (JP)
(72) Inventor: Nakanishi, Akio, Kanagawa 228 (JP); Ikegaya, Ken-ichi, Yokohama-shi Kanagawa 240 (JP); Naito, Takao, Anjo-shi Aichi 446 (JP); Sejima, Yukio, Kawasaki-shi Kanagawa 211 (JP); Matsushima, Koji, Nakahara-ku Kawasaki-shi Kanagawa 211 (JP)
(74) Representative: Ritter und Edler von Fischern, Bernhard,Dipl.-Ing.

(56) References cited:
- EP-A- 0 008 564
- EP-A- 0 218 482
- DE-B- 2 128 015
- US-A- 3 766 403
- US-A- 4 458 111
- US-A- 4 852 147
- PATENT ABSTRACTS OF JAPAN vol. 13, no. 58 (E-714)(3406) 09 February 1989, & JP-A-63 248227 (AISIN SEIKI) 14 October 1988.
- PATENT ABSTRACTS OF JAPAN vol. 6, no. 22 (P-101)(900) 09 February 1982, & JP-A-56 143023 (MATSUSHITA DENKI SANGYO) 07 November 1981.

## Description

### Background of the Invention

The present invention relates to an over-discharge protection circuit, for example included in a charge circuit in a portable apparatus like a portable cordless telephone.

A portable cordless telephone, for example, known from EP-A-0 218 482 or US-A-4 458 111, usually comprises a portable portion (handset) and a base unit. The handset is provided with a dial or push button portion, a transmitter-receiver and a chargeable battery, and the base unit is provided with a transmitter-receiver and a battery charger and is connected to a telephone cable. The charge circuit is constituted by the chargeable battery in the handset and the battery charger in the base unit. The battery charger is connected to the chargeable battery through two contact terminals and charges the chargeable battery when the telephone is not used, to recover the power discharged from the chargeable battery when the telephone is used.

A problem arises, however, when the chargeable battery is charged by the battery charger. Namely, when a power source for the battery charger is turned OFF during a charging of the battery, the battery discharges power through a load (dial portion, transmitter-receiver, etc.), and if this discharging state is not interrupted, an over-discharge of the battery occurs. US-A-4 458 111 therefore suggests to automatically connect and disconnect these loads from the battery dependent on charging voltage being present across the charging terminals.

An over-discharge protection circuit is also disclosed in DE-B-2 128 015 which comprises an accumulator being charged by a main power source. In case that the main power source fails switching transistors are provided to connect a lamp to the accumulator until the voltage accross the accumulator is decreased to a predetermined level. Then, the accumulator is disconnected from the lamp to protect the accumulator from being over-discharged. DE-B-2 128 015 therefore teaches to connect a load to a battery of a battery charging circuit and to disconnect the battery from the load if the battery has been discharged to a certain level.

If the above described over-discharge protection circuit is used in a charge circuit for a portable apparatus, upon failure of the main power source, the battery is discharged until it can no longer perform its function, i.e. drive the circuit of the portable portion. Although an over-discharge of the battery is avoided, the known over-discharge protection circuit is disadvantageous.

### Summary of the Invention

The object of the present invention is to provide an improved over-discharge protection circuit included in a charge circuit in a portable apparatus to prevent an over-discharge of the battery when a power source of a battery charger is accidentally turned OFF during a charging of the battery.

In accordance with the present invention, there is provided an over-discharge protection circuit included in a charge circuit in a portable apparatus having a portable portion and a body, said portable portion and said body being interconnected via two charging terminals of said body and two charging terminals of said portable portion, respectively, when said portable portion is placed on said body, comprising: switch means for connecting and disconnecting a load from a battery , of which one terminal is connected to said battery and of which another terminal is connected to said load, said battery being charged by a battery charger provided in said body; and a switch control means connected to said switch means through a resistor for turning said switch means on and off; characterized in that a series circuit including a first and second resistor and a diode is provided, which is connected between the battery side terminal of the switch means and the other battery terminal being connected to the load, said first resistor being provided in the body and being connected across said battery charger, said second resistor and said diode being provided in said portable portion, electrically in parallel to a diode which forms part of the battery charging path said second resistor having a resistance which is much larger than that of said first resistor and being connected between said switch means and said switch control means, said diode of the series circuit being connected between said switch control means and said first resistor so as to allow a flow of discharge current, through the second resistor and the diode, to the first resistor to be detected when the power source of said battery charger is accidentally turned OFF during a charge of said battery, and to cause the switch control means to open the switch means.

### Brief description of the drawings

In the drawings:
Fig. 1 is a charge circuit of a conventional portable apparatus;
Fig. 2 is a charge circuit including an over-discharge protection circuit according to the present invention;
Fig. 3 is an over-discharge protection circuit according to one embodiment of the present inention; and
Fig. 4 is an over-discharge protection circuit according to another embodiment of the present invention.

### DESCRIPTION OF THE PREFERRED EMBODIMENTS

Before describing the preferred embodiments, an explanation will be given of a conventional charge circuit.

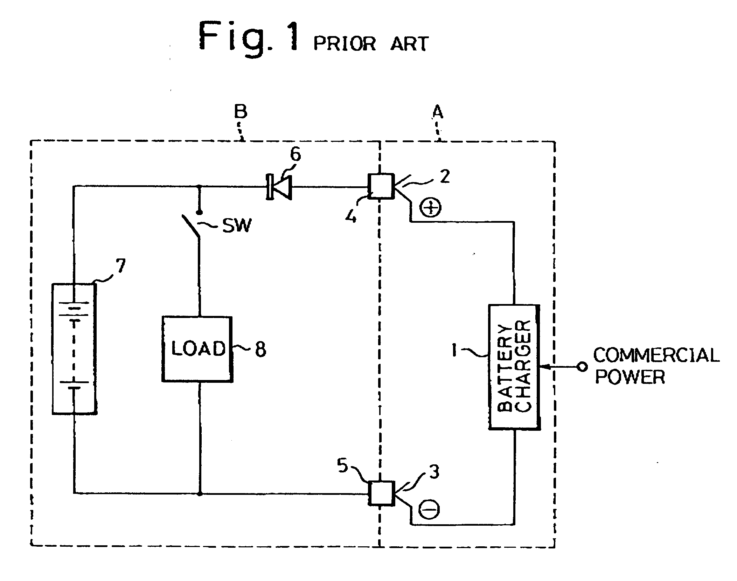

Figure 1 shows a charge circuit of a conventional portable apparatus. In Fig. 1, A represents a body (base board) and B represents a handset. The portable apparatus, for example, a portable cordless telephone, is constituted by the body and the handset. Reference number 1 represents a battery charger connected to a commercial power, and 2 and 3 are charging terminals provided in the body A. Reference numbers 4 and 5 represent terminals connected to or disconnected from each of the charging terminals 2 and 3, 6 is a diode, 7 is a battery, and 8 is a load (a dial portion, transmitter-receiver, etc.), all of which are provided in the handset. Note, some handsets have an external switch SW mounted on an external surface of the handset.

When the handset B is placed in the body, the terminals 4 and 5 are interconnected to the corresponding charging terminals 2 and 3, respectively. The charge current flows to the battery 7 through the diode 6, thus preventing a reverse current. In this case, the load 8 can operate while the battery is being charged. When the battery 7 is fully charged by the battery charger 1, after the elapse of a predetermined time, the flow of the charge current is stopped and the power to the load 8 is cut and sent to the battery 7.

During the charging of the battery 7, however, sometimes the commercial power is accidentally turned OFF, particularly during the night, and in this case, the battery 7 is discharged to the load 8 and the voltage of the battery 7 is gradually lowered, and accordingly, the voltage of the battery 7 is depleted to a level at which the telephone cannot be used.

As a countermeasure to such a discharge, an external switch SW is provided for some handsets. This switch is turned OFF while the battery is charged and turned ON when the telephone is used. But, unfortunately the user frequently forgets to operate this switch, and thus it is necessary to automatically cut the current flow to the load 8 when the commercial power is accidentally turned OFF while the battery is being charged.

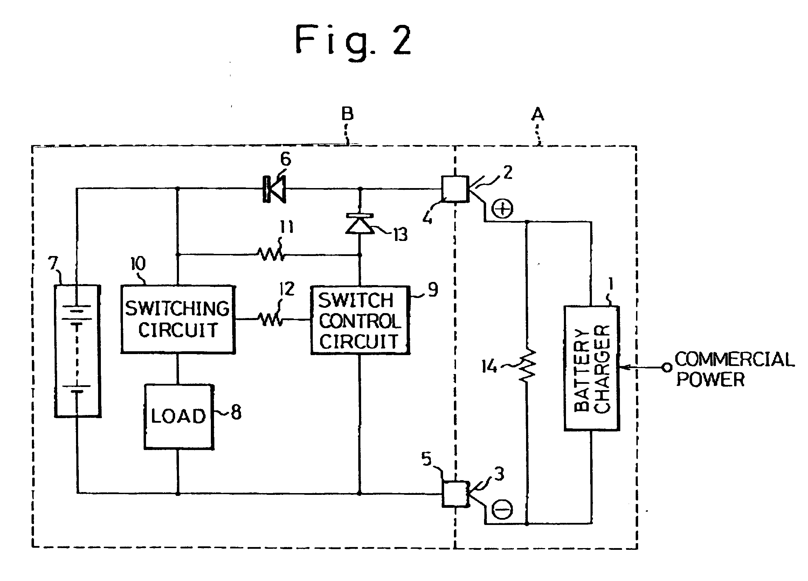

Figure 2 shows a charge circuit including an over-discharge protection circuit according to the present invention. In Fig. 2, Reference numbers 1 to 8 are given to the same elements as shown in Fig. 1, and reference numbers 9 to 14 represent new elements according to the present invention. Reference number 9 represents a switch control circuit, 10 a switching circuit, 11 a second resistor, 12 a third resistor, 13 a diode, and 14 a first resistor. The first resistor 14 is connected across the battery charger 1 in the body A, and the switching circuit 10 is connected between the load 8 and the battery 7. The switch control circuit 9 is connected to the switching circuit 10 through the third resistor 12 and the second resistor 11. The diode 13 is connected to the switch control circuit 9 and the first resistor 14.

The over-discharge protection circuit according to the present invention is constituted by the switch control circuit 9, the switching circuit 10, the first resistor 14, the second resistor 11, the third resistor 12, and the diode 13.

In this structure, the battery 7 is charged by the battery charger 1 through the charging terminals 2 and 3, the terminals 4 and 5, and the diode 6 when the handset B is placed on the body A. In this case, the activation of the switch control circuit 9 is based on the current flow through the diode 6 and the second resistor 11, and accordingly, the switching circuit 10 can be turned ON/OFF by the switch control circuit 9. The switching circuit 10 is turned ON when the battery is being charged.

If the commercial power to the battery charger 1 is accidentally turned OFF while the battery 7 is being charged, the switching circuit 10 is automatically turned OFF by the switch control circuit 9, as briefly explained below. Namely, when the voltage across the charging terminals 2 and 3 (i.e. terminals 4 and 5) becomes zero volt, the switch control circuit 9 is inactivated and the discharge current from the battery 7 flows through the second resistor 11, the diode 13, the terminal 4, the charging terminal 2, and the first resistor 14. In this case, the discharge current is very small because the resistance value of the resistor 11 is very large. Accordingly, when the switching circuit 10 is automatically turned OFF, a large discharge current does not flow to the load 8.

Conventionally, the battery 7 is discharged to the load 8 and the voltage of the battery 7 is gradually lowered, and thus the voltage of the battery 7 is depleted to a level at which the telephone cannot be used, but in the present invention, since the current flow from the battery 7 to the load 8 is cut when the commercial power is accidentally turned OFF, such an over-discharge of the battery 7 is prevented.

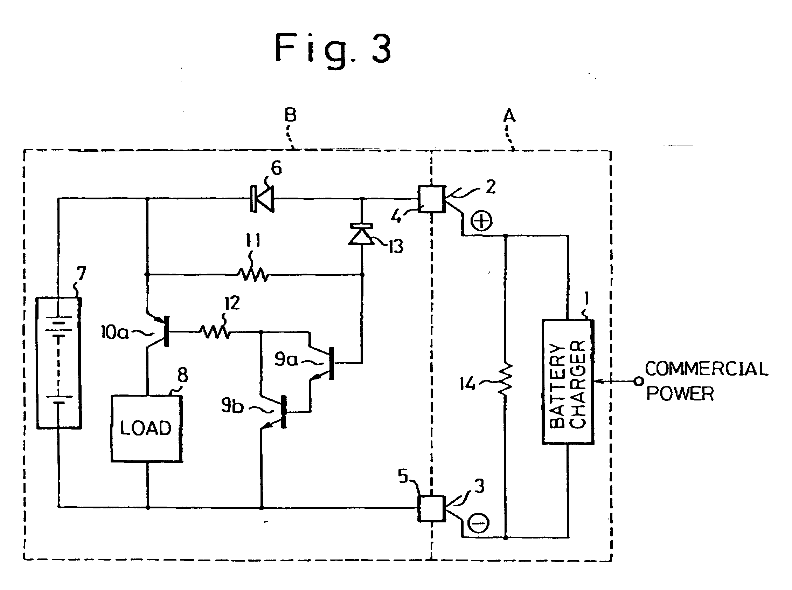

Figure 3 is an over-discharge protection circuit according to an embodiment of the present invention. In Fig. 3, the switch control circuit 9 is constituted by two transistors 9a and 9b forming a Darlington connection. The Darlington connection is advantageous for obtaining a large current (the current amplification factor is doubled), and accordingly, the current flowing through the resistor 11 can be set to a very small value; i.e., the resistance value of the resistor 11 can be set to a very large value.

As shown in Fig. 3, a collector of the transistor 9a is connected to a collector of the transistor 9b, and an emitter of the transistor 9a is connected to a base of the transistor 9b. The base of the transistor 9a is connected to an emitter of the transistor 10a through the second resistor 11. In one embodiment of the present invention, the switching circuit 10 is constituted by a PNP type transistor 10a. The emitter of the transistor 10a is connected to a common contact point between the battery 7, the second resistor 11, and the diode 6, the collector of the transistor 10a is connected to the load 8, and the base of the transistor 10a is connected to the collectors of the transistors 9a and 9b through the third resistor 12. The diode 13 is turned ON when the voltage of an anode is higher than that of a cathode of the diode 13, and therefore, the diode 13 is turned ON when the power source is accidentally turned OFF. The first resistor 14 detects current flowing from the battery 7 to the first resistor 14 through the second resistor 11, the diode 13, the terminal 4, and the charging terminal 2 when the power source is turned OFF. This resistor 14 must be provided for a half-wave rectifier circuit (not shown) of the battery charger, because an output impedance of the half-wave rectifier circuit is very large. Conversely, in a full-wave rectifier circuit (not shown), the resistor 14 is not necessary because the output impedance is smaller.

During a charge of the battery 7, the charging current flows to the battery 7 through the charging terminal 2, the terminal 4, and the diode 6. The charging current also flows to the base of the transistor 9a, and thus the transistor 9a is turned ON. In this case, the current does not flow to the diode 13 because the voltage of the cathode is equal to that of the anode. When the transistor 9a is turned ON, the transistor 9b is also turned ON and a large current flows to the base of the transistor 10a through the third resistor 12, and accordingly, the transistor 10a is turned ON. Therefore, the charging current also flows to the load 8 during a charge of the battery 7. The charging of the battery 7 is continued until the voltage of the battery is equal to that of the battery charger 1.

When the handset is removed from the body when using the telephone, the current flows from the battery 7 to the transistor 9a through the second resistor 11 and the transistor 10a is turned ON, as explained above, and thus the current flows to the load 8.

When the power source is accidentally turned OFF while the battery 7 is being charged, the diode 13 is turned ON because the voltage of the battery charger 1 is reduced to zero volt. Accordingly, the current from the battery 7 flows to the first resistor 14 through the second resistor 11 and the diode 13. In this case, the resistance value of the resistor 11 is larger than that of the resistor 14; i.e., the relationship between these resistors is expressed as R₁₄ « R₁₁. For example, the resistance value of the resistor 11 is 470 KΩ and the resistance value of the resistor 14 is 2.2 KΩ as the best mode. Accordingly, the current flowing through the resistor 11 is very small (approximately, 10 µA) and the base current is also very small (approximately, 5 µA), and thus the transistor 9a can not be turned ON. As a result, the transistor 10a is turned OFF and the load 8 can be automatically disconnected from the battery 7 when the power source is accidentally turned OFF while the battery 7 is being charged, and thus an over-discharge of the battery 7 is prevented.

In this case, although a very small current flows to the resistor 14, this discharge current is negligible because it is very small in comparison with the discharge current flowing to the load 8.

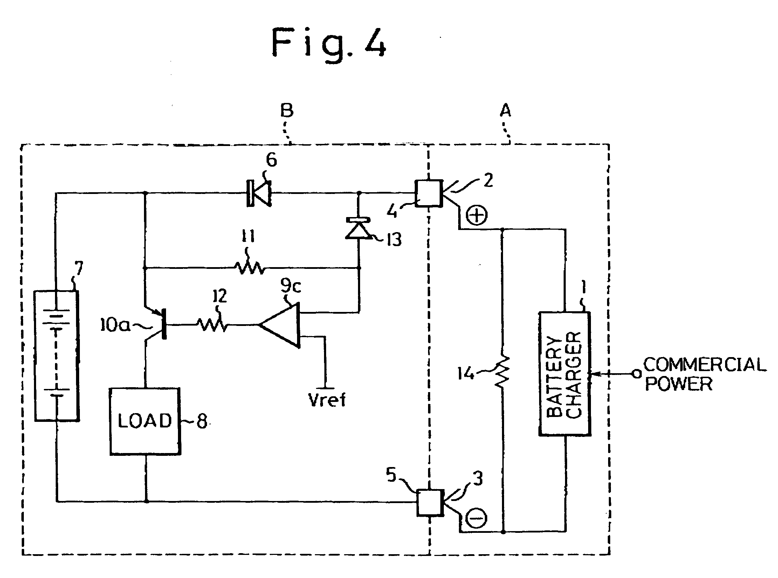

Figure 4 shows an over-discharge protection circuit according to another embodiment of the present invention. In Fig. 4, reference number 9c represents a comparator circuit, and V_{ref} represents a reference voltage. The reference voltage V_{ref} is set to a value lower than the voltage of the battery 7, and accordingly, the comparator 9c is turned ON while the battery 7 is being charged, and thus the transistor 10a is also turned ON. If the power source is accidentally turned OFF, the comparator 9c is turned OFF, since the input voltage of the comparator 9c becomes lower than the reference voltage V_{ref}, and accordingly, the transistor 10a is turned OFF because a current is not supplied from the comparator 9c. The other operations are the same as those of the circuit shown in Fig. 3, and thus an explanation thereof is omitted.

Although the above explanation has been given with regard to a portable cordless telephone as one embodiment, it is possible to apply the over-discharge protection circuit of the present invention to other portable apparatuses having a secondary battery charged by a battery charger.

## Claims

1. An over-discharge protection circuit included in a charge circuit in a portable apparatus having a portable portion (B) and a body (A), said portable portion and said body being interconnected via two charging terminals (2, 3) of said body and two charging terminals (4,5) of said portable portion, respectively, when said portable portion is placed on said body, comprising:
switch means (10) for connecting and disconnecting a load (8) from a battery (7), of which one terminal is connected to said battery and of which another terminal is connected to said load, said battery being charged by a battery charger (1) provided in said body; and
a switch control means (9; 9a, 9b; 9c) connected to said switch means (10) through a resistor (12) for turning said switch means on and off;
characterized in that
- a series circuit including a first and second resistor (14, 11) and a diode (13) is provided, which is connected between the battery side terminal of the switch means (10) and the other battery terminal being connected to the load,
- said first resistor (14) being provided in the body (A) and being connected across said battery charger (1),
- said second resistor (11) and said diode (13) being provided in said portable portion (B), electrically in parallel to a diode (6) which forms part of the battery charging path,
- said second resistor (11) having a resistance which is much larger than that of said first resistor and being connected between said switch means and said switch control means, for controlling a current flow to said switch control means (9), and
- said diode (13) of the series circuit being connected between said switch control means (9) and said first resistor (14) so as to allow a flow of discharge current, through the second resistor (11) and the diode (13), to the first resistor (14) to be detected when the power source of said battery charger is accidentally turned OFF during a charge of said battery (7), and to cause the switch control means (9) to open the switch means (10).

2. An over-discharge protection circuit according to claim 1, wherein said switch means comprises a PNP type transistor (10a).

3. An over-discharge protection circuit according to claim 1 or 2, wherein said switch control means comprises two transistors (9a, 9b) forming a Darlington circuit.

4. An over-discharge protection circuit according to claims 1 or 2, wherein said switch control means comprises a comparator (9c).

## Patentansprüche

1. Überentladungschutzschaltung beinhaltet in einer Ladeschaltung in einer tragbaren Vorrichtung mit einem tragbaren Abschnitt (B) und einem Hauptteil (A), wobei der tragbare Abschnitt und der Hauptteil verbunden sind über zwei Ladeanschlüsse (2,3) des Hauptteils bzw. zwei Ladeanschlüsse (4,5) des tragbaren Abschnitts, wenn der tragbare Abschnitt auf dem Hauptteil plaziert ist, welche umfaßt:
eine Schalteinrichtung (10) zum Verbinden und Entkoppeln einer Last (8) von einer Batterie (7), von der ein Anschluß verbunden ist mit der Batterie und deren anderer Anschluß verbunden ist mit der Last, wobei die Batterie geladen wird durch einen Batterielader (1) vorgesehen in dem Hauptteil; und
eine Schaltsteuereinrichtung (9; 9a, 9b; 9c;) verbunden mit der Schalteinrichtung (10) durch einen Widerstand (12) zum Ein- und Ausschalten der Schalteinrichtung;
dadurch gekennzeichnet daß
- eine Reihenschaltung beinhaltend einen ersten und zweiten Widerstand (14,11) und eine Diode (13) vorgesehen ist, welche verbunden ist zwischen dem batterieseitigen Anschluß der Schalteinrichtung (10), wobei der andere Batterieanschluß mit der Last verbunden ist,
- der erste Widerstand (14) vorgesehen ist in dem Hauptteil (A) und angeschlossen ist über dem Batterielader (1),
- der zweite Widerstand (11) und die Diode (13) vorgesehen sind in dem tragbaren Abschnitt (B), elektrisch parallel zu einer Diode (6), welche einen Teil des Batterieladeweges bildet,
- der zweite Widerstand (11) einen Widerstandswert hat, welcher viel größer ist als der des ersten Widerstands, und angeschlossen ist zwischen der Schalteinrichtung der Schaltsteuereinrichtung zum Steuern eines Stromflusses an die Schaltsteuereinrichtung (9), und
- die Diode (13) der Reihenschaltung angeschlossen ist zwischen der Schaltsteuereinrichtung (9) und dem ersten Widerstand (14), um so zu erlauben, daß ein Fluß des Entladestroms durch den zweiten Widerstand (11) und Diode (13) an den ersten Widerstand (14) erfaßt wird, wenn die Leistungsquelle des Batterieladers zufällig ausgeschaltet ist während eines Ladens der Batterie (7), und um zu veranlassen, daß die Schaltsteuereinrichtung (9) die Schalteinrichtung (10) öffnet.

2. Überentladungsschutzschaltung nach Anspruch 1 dadurch gekennzeichnet daß die Schalteinrichtung einen PNP-Typ Transistor (10a) umfaßt.

3. Überentladungsschutzschaltung nach Anspruch 1 oder 2, dadurch gekennzeichnet, daß die Schaltsteuereinrichtung zwei Transistoren (9a, 9b) umfaßt, welche eine Darlington Schaltung bilden.

4. Überentladungsschutzschaltung nach Anspruch 1 oder 2, dadurch gekennzeichnet, daß die Schaltsteuereinrichtung einen Komparator (9c) umfaßt.

## Revendications

1. Circuit de protection contre une décharge excessive inclus dans un circuit de charge dans un appareil portable comportant une partie portable (B) et un corps (A), la partie portable et le corps étant interconnectés via deux bornes de chargement (2, 3) du corps et deux bornes de chargement (4, 5) de la partie portable, respectivement, lorsque cette partie portable est placée sur le corps, comprenant :
un moyen interrupteur (10) servant à connecter et déconnecter une charge (8) d'une batterie (7), dont une borne est connectée à la batterie et dont une autre borne est connectée à la charge, la batterie étant chargée par un chargeur de batterie (1) présent dans le corps, et
un moyen de contrôle de l'interrupteur (9 ; 9a, 9b ; 9c) connecté au moyen interrupteur (10) à travers une résistance (12), pour placer le moyen interrupteur sur marche et arrêt ;
caractérisé en ce que
un circuit série comprenant une première et une seconde résistance (14, 11) et une diode (13) étant prévue et étant connectée entre la borne du côté batterie du moyen interrupteur (10), l'autre borne de batterie étant connectée à la charge,
la première résistance (14) étant disposée dans le corps (A) et étant connectée au travers du chargeur de batterie (1),
la seconde résistance (11) et la diode (13) étant disposées dans la partie portable (B) étant montée en parallèle à une diode (6) faisant partie du circuit de chargement de la batterie,
la seconde résistance (11) présentant une impédance de beaucoup supérieure à celle de la première résistance et étant connectée entre le moyen interrupteur et le moyen de commande de connexion pour commander un flux de courant vers le moyen de contrôle de l'interrupteur (9), et
la diode (13) du circuit série étant connectée entre le moyen de contrôle de l'interrupteur (9) et la première résistance (14) de façon à permettre qu'un flux de courant de décharge s'écoulant à travers la seconde résistance (11) et la diode (13), vers la première résistance (14) soit détecté lorsque la source de puissance du chargeur de batterie est accidentellement placée sur arrêt pendant une charge de la batterie (7), et à amener le moyen de commande de l'interrupteur (9) à ouvrir le moyen interrupteur (10).

2. Circuit de protection contre une décharge excessive selon la revendication 1, dans lequel le moyen interrupteur comprend un transistor de type PNP (10a).

3. Circuit de protection contre une décharge excessive selon la revendication 1 ou 2, dans lequel le moyen de contrôle de l'interrupteur comprend deux transistors (9a, 9b) constituant un circuit Darlington.

4. Circuit de protection contre une décharge excessive selon la revendication 1 ou 2, dans lequel le moyen de contrôle de l'interrupteur comporte un comparateur (9c).
